(19) Europäisches Patentamt
European Patent Office
Office européen des brevets

(11) **EP 2 906 382 B2**

(12) **NEW EUROPEAN PATENT SPECIFICATION**
After opposition procedure

(45) Date of publication and mention
of the opposition decision:
**01.11.2023 Bulletin 2023/44**

(45) Mention of the grant of the patent:
**07.11.2018 Bulletin 2018/45**

(21) Application number: **12884266.3**

(22) Date of filing: **07.09.2012**

(51) International Patent Classification (IPC):
**B23D 61/18** (2006.01)     **B28D 1/06** (2006.01)
**B28D 5/04** (2006.01)

(52) Cooperative Patent Classification (CPC):
**B23D 61/185**

(86) International application number:
**PCT/CN2012/081097**

(87) International publication number:
**WO 2014/036714 (13.03.2014 Gazette 2014/11)**

(54) **A SHAPED SAWING WIRE WITH SUBSURFACE TENSILE RESIDUAL STRESSES**

GEFORMTER SÄGEDRAHT MIT RESTSPANNUNGEN UNTER DER OBERFLÄCHE

FIL DE SCIAGE PROFILÉ AVEC DES CONTRAINTES RÉSIDUELLES DE TRACTION SOUS LA SURFACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.08.2015 Bulletin 2015/34**

(73) Proprietor: **Bekaert Binjiang Steel Cord Co., Ltd.
Jiangyin City, Jiangsu Province (CN)**

(72) Inventors:
• **VAN VOOREN, Wim
B-8790 Waregem (BE)**
• **WANG, Fei
Jiangyin
Jiangsu (CN)**
• **HU, Zhikun
Wuxi, Jiangsu (CN)**

• **HUANG, Wenxian
Jiangyin
Jiangsu (CN)**

(74) Representative: **Seynhaeve, Geert Filiep
NV Bekaert SA
IPD - PC6030
Bekaertstraat 2
8550 Zwevegem (BE)**

(56) References cited:
WO-A1-2006/067062     WO-A1-2011/126073
WO-A1-2012/069314     CN-A- 102 205 563
CN-Y- 2 284 115     GB-A- 2 092 629
JP-A- H0 970 747     JP-A- H1 044 132
JP-A- 2001 259 990     JP-A- 2005 193 332
KR-B1- 100 888 026     KR-B1- 100 888 026
US-A1- 2011 263 187     US-B2- 6 783 442

## Description

## Technical Field

The present invention relates to steel wires adapted to cutting hard materials, such as steel wires that are used to cut materials like silicon ingot, silicon wafer, cemented carbide, magnet material, quartz rods, sapphire and ceramics. In particular the present invention relates to shaped sawing wires according to the preambles of claims 1 and 13.

## Background Art

Multi-wire sawing of hard materials in the photovoltaic or semiconductor field is performed as follows:

1. Guiding of a single wire over driven capstans in multiple loops;
2. The capstans are provided with grooves for offsetting the wire between loops: a wire web is thus formed;
3. Usage of a loose abrasive slurry as a cutting agent that is fed on the wire web while the workpiece is slowly entered into the wire web;
4. The wire is reciprocated between two spools (back and forth) or alternatively the wire always travels in the same direction.

It is obvious that the wire plays an important role in the sawing process. The function of the wire is to rub against the workpiece while dragging the abrasive slurry into the cut. The abrasive in the slurry abrades away the workpiece as well as part of the wire. The wire must be able to maintain a certain tension at all times as this tension is converted into the normal force by which the abrasive particles are pushed into the workpiece.

For straight wires, various patents disclosed the benefits of low internal stress (either neutral or compressive) or zero-residual stress gradients in order to maintain the straightness of the wire during sawing. However, as the wire wears and hence the diameter reduces during its use in the sawing process with abrasive slurry, it must be replaced before it breaks under the tension applied. Besides, as the straight wire tends to rotate around its longitudinal axis during cutting, the abrasive particles initially caught between the wire and the workpiece tend to be pushed out from between the wire and the workpiece. As a result the amount of abrasive is depleted from the start of the cut onward. If less abrasive is present between wire and workpiece, the cutting is reduced and friction between wire and workpiece starts to occur. While this depletion is not a particular problem in case of cutting lengths of below 400 mm or less (the example of silicon ingots is referred to), it becomes a problem when longer lengths need to be cut. It is therefore a recurring theme in the field of sawing wire to find ways to entrain sufficient abrasive into the cut so that the cutting action is maintained till the exit of the cut.

KR100 888 026 B1 discloses shaped sawing wires according to the preambles of claims 1 and 14, in particular a straight wire with residual stresses within a particular range to convert the straight shape into a small wavy shape in order to make up the depleted cutting performance caused by the decrease of the wire diameter during the sawing process. As mentioned above, the straight wire is worn in the process and the diameter is decreasing gradually. Thus, the slurry dragability is reduced step by step as well as the cutting efficiency. By a careful selection of the residual stress applied on such a straight wire, as the sawing is proceeding, the straight wire turns to be a structured sawing wire with a small wavy shape, which is bound to entrain more slurry into the cut, further contributing to the cutting efficiency. Therefor the cutting action is maintained. The problem is that it is difficult to make such a specific straight wire as the residual stress must be controlled very precisely. Or else it will turn to have an exactly opposite effect.

It is obvious that one of the solutions to entrain more abrasive slurry into the cut during sawing is to structure the wire on its own, which means making a straight wire into a shaped one as mentioned above.

WO 2006 067062 disclosed a monofilament sawing wire provided with a plurality of crimps, each crimp having a pitch length and an amplitude, the crimps being arranged in at least two different planes. A circumscribed enveloping diameter 'D' of the sawing wire is between 1.05 and 1.50 times the diameter 'd' of the wire itself.

WO 2012 069314 describes a steel sawing wire with a helicoidal shape comprising segments with bends in between. The bends are outwardly radial to the helicoidal shape. Such shape of the sawing wire is configured so as to have a good cooperation with the abrasive particles. This kind of shaped sawing wire has a significant improvement of abrasive particle entrainment and action.

However, in each structured sawing wire, the shape is bound to degrade in the cutting process because of the wire wear and the applied tension. Also as the wire repeatedly enters into the cut, there is a straightening effect of the wire as if it is drawn through an orifice at every entry into the ingot (which can be as much as a thousand times or more). This results in a shape that cannot be maintained from the start of the cut onward till the end of the cutting. It will be clear from the above that the abrasive particles dragability as well as the cutting efficiency of the wire is reduced as time goes by during the sawing process.

**Disclosure of Invention**

It is an object of the invention to provide a shaped sawing wire wherein at least one of the above stated prior art drawbacks is obviated.

It is also an object of the present invention to provide a shaped sawing wire that keeps its shape from the entry of the cut onward till the exit of the wire from the sawing process.

According to the invention a shaped sawing wire having the features of claims 1 and 14 is described that is particularly suitable for sawing hard and brittle materials such as silicon, germanium, silicon carbide, quartz and glass, ceramic materials, sapphire, rare earth magnets, natural stone such as marble and the like.

The sawing wire is in its most general form a steel wire having bends with segments in between. The segments between bends are substantially straight. Thereby it is meant that the segments can show some curvature that is in any case much less than the curvature of the wire at the bends. A bend has an inner and an outer curvature. With the 'inner curvature' is meant that part of the bend that is between two adjacent segments while the 'outer curvature' is circumferentially opposite of the 'inner curvature' and is situated away from the adjacent segments. According to the invention, the shaped sawing wire further has subsurface tensile residual stresses for keeping the shape of the wire while sawing. The wording "subsurface" is to be understood in a sense that there is quite a small distance from the exterior surface of the wire : e.g. a depth of 5 to 10 $\mu$m from the exterior surface. For the purpose of this application, the subsurface tensile residual stresses of the shaped sawing wire is to keep the shape of the wire while sawing in order to avoid shape deformation.

The subsurface residual stresses in said segments are by preference at least 1500 MPa, e.g. more than 1800 MPa and are tensile in nature.

According to the invention, the shaped sawing wire has subsurface tensile residual stresses in the inner curvature of the bends. It is the basic working principle of this invention : while the most protruding parts of the bends - the outer curvature of the bend - are worn step by step during the sawing process, the subsurface tensile residual stresses in the radially outer curvature of the bends disappear as the material is abraded away. Due to the subsurface tensile residual stresses in the inner curvature of the bends, a bending moment occurs at the bend that at least maintains the bending degree, which results in a significant shape upgrade. It can compensate for the shape degradation of the shaped sawing wires in the cutting process because of wire wear, cut entry straightening effect and applied tension. Therefore, the shape of the wire while sawing is maintained so that the cutting action is preserved till the exit of the cut.

It is remarkable that a sawing wire with subsurface tensile residual stresses has such advantageous properties. In general - as evidenced in the background art section of this application - residual compressive or at the most low level tensile residual stresses are preferred for a sawing wire. It is the merit of the inventors to oppose this commonly accepted teaching by going into the completely opposite way.

More preferably, the subsurface tensile residual stresses at the inner curvatures of the bends of the shaped sawing wire is at least 2000 MPa. If the stresses are less than 2000 MPa, with the depletion of the outer curvature material at the bends while sawing, the stresses at the inner curvatures of the bends are not big enough to maintain the degree of bending, which means that the shape of the shaped sawing wire degrades in the cutting process. At the same time, one can observe that the cutting performance of the sawing will decrease.

According to the invention, the shaped sawing wire itself is having an axis and a wavy shape in one or more planes, said one or more planes comprising said axis. With a wavy shape in a plane is meant a shape wherein bends alternate direction between consecutive segments. A wavy shape has a substantial zigzag shape. A wavy shape can e.g. be obtained by giving the wire a repetitive crimp i.e. by crimping the wire.

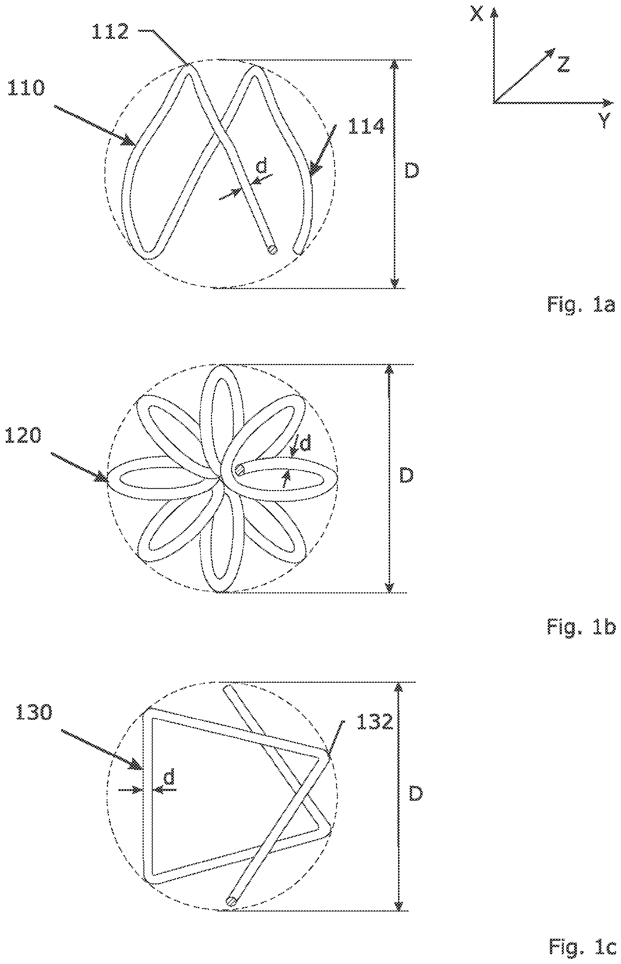

The shaped sawing wire according to the invention has a wavy shape in a first plane and in a second plane, the second plane being different from the first plane. Such a sawing wire 10 as shown in Fig.1a has improved abrasive material entrainment characteristics. Indeed, the crimps provide the saw wire with more recesses wherein the abrasive material can sit.

Alternatively, the shaped sawing wire is so constructed that the angle of said one or more planes relative to a fixed plane comprising the axis varies along the axial length of the shaped sawing wire. It is as if the one or more planes wherein the wavy shape is made are rotated around the axis of the shaped sawing wire when progressing along the length of the wire.

Preferably, the angle of said one or more planes relative to the fixed plane comprising the axis increases or decreases along the axial length of said sawing wire. This can for example be obtained by twisting the wire around its own axis after having given it a wavy shape in one or more planes.

One possible embodiment of such a shaped sawing wire with a single crimp in one plane wherein the one plane has an increasing angle relative to a fixed plane comprising the axis of the shaped sawing wire looks like a 'flower' when viewed along the axial length of the wire as shown in Fig.1b.

Alternatively, the angle between the one or more planes relative to a fixed plane alternatingly increases over a first length and subsequently decreases along a second length. It is as if the one or more planes first rotate in a first direction over a first length and thereafter revert rotation direction over a second length. So for example a rotation of the plane(s) in clockwise direction over a first distance is followed by a rotation in counter-clockwise direction over a second distance along the length of the wire.

According an example not according the invention, the shaped sawing wire itself is having a helicoidal shape around the axis of the shaped sawing wire and the bends of said wire are arranged radially outward (without wavy deformation in a plane), i.e. away of the symmetry axis of the helicoidal shape. A helicoidal shape is the space curve that remains invariant under a rotation under a certain angle in combination with a translation. A helix is a special helicoidal shape that remains invariant under any rotation angle with an associated translation.

The wire preferably has a diameter between 50 to 500 $\mu$m, more preferred between 80 and 150 $\mu$m, while typical diameters are 80, 90, 100, 110, 120, 130, 140 and 150 $\mu$m.

Preferably, in all the shapes referred in the above mentioned embodiments, the distance along the axis of the shaped sawing wire between bends is between 10 and 100 times the diameter 'd' of said sawing wire itself. In combination with the axial movement of the wire, this results in bends that are spatially separated from one another. If the distance along the axis between bends of the shaped sawing wire is more than 100 times the diameter 'd' of the sawing wire itself, the crimps provide the saw wire with too distant recesses leading to insufficient drag of abrasive material into the cut. Otherwise, if the distance along the axis between bends of the shaped sawing wire is less than 10 times the diameter 'd' of the sawing wire itself, the degree of bending is too large and the wire will elongate too much during use. More preferably, the distance along the axis of the shaped sawing wire between bends is between 25 to 50 times the diameter 'd' of said sawing wire itself, e.g. 30 times the diameter 'd' of said sawing wire.

According to the invention, the shaped sawing wire has a circumscribed diameter 'D' and the ratio D/d is between 1.04 and 1.40. Preferably, the ratio D/d is between 1.05 and 1.20, e.g. 1.10. The ratio D/d is a convenient measure to use as a production control. It is the ratio of the optical diameter of the wire (corresponding to the diameter of the circumscribed cylinder) to the wire diameter. Large D/d values such as above 2.0 are examples not according to the invention as then the shaped wire obtains a too large elongation at low load which is detrimental for the bow formation in the cutting. The saw bow shows a too large sagitta so that the side sections of the workpiece are already cut while the middle is still not cut through.

According to the invention the centerline of the wire has a length 'S' when measured over an axial length 'L', and preferably (S-L)/L is between 0.006 and 0.6 per cent. This (S-L)/L is the 'extra length' that is build-in to the wire due to the shape of the wire. If this 'extra length' is below 0.006% there is insufficient deformation of the wire to entrain particles in the bends of the wire resulting in insufficient drag of abrasive. If this 'extra length' is above 0.6% the wire will elongate much too much during use, which would cause the saw wire to slacken during the sawing process.

Abrasive particles used for loose abrasive sawing are of the microgrit type. These particles are categorised by means of screening, air classifying or water classifying into different size classes. Different standards exist (FEPA, JIS and ANSI) on what the minimum size, median and maximum size per class is. In general the 'wire saw' range for the abrasives is typically regarded as FEPA 500 (12.8 $\mu$m) to 600 (9.3 $\mu$m) or JIS 800 (14 $\mu$m) to JIS 2000 (6.7 $\mu$m). The numbers between brackets refer to the median particle size. The median particle size is that size for which half of the particles are larger than that size and the other part smaller than that size. For large span cutting, bigger particle sizes are preferred such as FEPA 360 (22.8 $\mu$m) up to FEPA 230 (53.0 $\mu$m). Most preferred is FEPA 320 with a median particle size of 29.2 $\mu$m.

More preferably, if (S-L)/L is from 0.01 to 0.5 percent, the saw wire is provided with recesses of sufficient size for receiving and entraining abrasive material, while at the same time maintaining the necessary elongation characteristics for a saw wire.

It helps the dragging of the abrasive particles if the surface of the wire is softer than the core of the wire although bare steel at the surface of the wire is therefore not excluded or less preferred. A softer surface can be obtained by treating the surface of the wire. For example, the wire can be coated with a coating that is softer than the steel wire core. Suitable coatings are an iron or low carbon steel coating, a copper, zinc, nickel, cobalt or tin coating or an alloy coating comprising two or more of the metals mentioned for example a brass (copper-zinc) or bronze (copper-tin) coating.

Preferably, the coating may further comprise abrasive particles selected from the group comprising diamond, cubic boron nitride, silicon carbide, aluminium oxide, silicon nitride, tungsten carbide or mixtures thereof. By attaching the abrasive particles to the wire, they are better held to the wire along the length of the cut. In this way the particles are better fed into the cut.

**Brief Description of Figures in the Drawings**

The invention will now be described into more detail with reference to the accompanying drawings wherein

Figure 1a shows a first embodiment of the structured sawing wire according tot the invention.
Figure 1b shows a second embodiment of the structured sawing wire.

Figure 1c shows a third embodiment of the structured sawing wire.
Figures 2 illustrates the general working principle of a shaped sawing wire according to the invention;
Figure 3 illustrates the cutting performance of reference wires and the wires according to the invention.

**Mode(s) for Carrying Out the Invention**

A shaped sawing wire according to the invention was obtained starting from a straight wire.

The straight wire was produced as follows. Starting product is a steel wire rod. This steel wire rod has following steel composition: A minimum carbon content of 0.65%, a manganese content ranging from 0.40% to 0.70%, a silicon content ranging from 0.15% to 0.30%, a maximum sulphur content of 0.03%, a maximum phosphorus content of 0.30%, all percentages being percentages by weight. A typical steel wire composition for high-tensile steel wire has a minimum carbon content of around 0.80 weight %, e.g. 0.78 - 0.82 weight %.

The steel rod is drawn in a number of consecutive steps until the required final diameter and required residual stresses. The drawing steps may be interrupted by one or more heat treatment steps such as patenting. The residual stress condition of the wire can be influenced by the drawing die scheme. A low reduction in the final pass compared to the previous passes will generally result in an increased tensile residual stress condition. Also by varying the die angle the tensile residual stress can further be increased (higher die angles give higher tensile residual stresses).

According to the invention, a conventional method is used to test the residual stresses of a steel wire, wherein said method comprises the following steps :

- cut off an about 85 mm long wire specimen. Such sample may show some curvature which should not be straightened out;
- Pickle the wire specimen for 10 minutes in a pickling solution made of 16 gram $(NH_4)_2S_2O_8$ and 120 mL $NH_4OH$ diluted to 1 litre with demineralized water;
- Water-rinse for 30 sec and air dry for 1 min;
- Bent one end over and form a clear angle of about 90° so that a tail of $70\pm1$ mm forms. The bend should be made radially inward of the curvature taken by the wire specimen in the plane of the wire specimen;
- Lacquer the short bent-over part (15 mm) with enamel nail paint and air dry for 1 min;
- Lacquer the inner side of the wire surface with enamel paint and air dry 1 min. About half of the circumference of the wire in cross section should be covered with enamel paint;
- Copy the shape of the specimen on a paper;
- Etch the specimen in etching solution at temperature $50\pm2$ °C for a period of time according to following formula:

$$\text{Time (sec.)} = 186.7 \times \text{wire diameter in mm} - 12.9$$

wherein the etching solution is made of one part $HNO_3$ and one part de-mineralised water. A layer of about 10% of the diameter 'd' of the wire is etched away from the non-covered part.
- Water-rinse for 5 sec. and air dry for 1 min.;
- Put the bent-over part of the etched specimen exactly on its original position on the paper copy. Take another photocopy of the specimen for reference. The second copy shows the shape of the wire before and after etching.;
- Determine the radius of curvature '$\rho_0$' of the sample before etching and after etching '$\rho_1$' by drawing a tangent circle at the bend with its centre in line with the short bent-over part. When, after etching, the wire tail bends in the direction of the short bent-over part, the residual stresses in the outer layer of the wire are tensile in nature. When, after etching, the wire tail bends away from the short bent-over part, the residual stresses in the outer layer of the wire are compressive in nature.

When carrying out an experiment on the wires for use in the a wire wire according to the invention, the wire after etching takes the shape of a circlet. An approximate formula to estimate the subsurface residual stress '$\sigma_1$' for the purpose of this application is given by:

$$\sigma_1 = \frac{3\pi E}{16(d_0^3 - d_1^3)}\left[\left(\frac{d_0^4}{\rho_1} + \frac{d_1^4}{2\rho_1}\right) - \left(\frac{d_0^4}{\rho_0} + \frac{d_0^4}{2\rho_1}\right)\right]$$

Wherein

$d_0$ is the original wire diameter before etching (expressed in mm)
$d_1$ is the wire diameter after etching (in mm)
$E$ is the modulus of the material which is for steel 200 000 N/mm$^2$
$\rho_0$ is the radius of curvature of the original wire (in mm)
$\rho_1$ is the radius of curvature of the wire after etching (in mm)

For example a wire with diameter of 120 $\mu$m (0.120 mm) that shows a radius of curvature of 188 mm before etching and after etching half of the outer perimeter shows a reduced diameter of 96 $\mu$m (0.096 mm) with a radius of curvature of 12 mm has a subsurface residual stress of 1550 N/mm$^2$.

According to the invention, the diameter of the circlet formed in this test must be smaller than 200 times the diameter of the wire 'd' in order to obtain a subsurface tensile residual stress of 1500 N/mm$^2$ or more when departing from a wire before etching that has a radius of curvature that is at least 1000 times the diameter 'd' of the wire. This applies for diameter 'd' of interest for the wire i.e. from 50 to 300 $\mu$m.

Such a straight steel wire with tensile residual stresses was then preformed into a shaped sawing wire. There are a number of ways in which the bends can be induced on the wire. The wavy form can be obtained by leading the straight wire through at least one pair of intermeshing toothed wheels. In this way a zigzag crimp is formed in a single plane. Crimps may also be obtained by a set of cams.

When combining crimps in mutually differing planes - e.g. perpendicular planes - a first embodiment 110 of the shaped sawing wire as shown in Fig.1a is obtained. The bending in the XZ plane gives rise to peaks 112. The bending in the YZ plane gives rise to peaks 114. The wire has a diameter 'd' and a circumscribing cylinder with axis in the Z-direction has a diameter 'D'.

A second embodiment 120 of the inventive shaped sawing wire as shown in Fig.1b is obtained by twisting the wire around its own axis after having given it a wavy shape in one plane. Again the wire has a diameter 'd' and a circumscribing cylinder with axis in the Z-direction has a diameter 'D'.

Further, a third embodiment 130 of the inventive structured sawing wire as shown in Fig.1c has successive bends by pushing the wire against a toothed wheel, in combination with an axial movement and a rotational movement of the wire. In this way the bends 132 are arranged radially outward with respect to the axis and have a helicoidally base shape.

Attention is drawn to the fact that in Figures 1a to 1c, the diameter of the filament 'd' and the diameter of the circumscribed circle 'D' are not to scale: in reality the diameter of the wire is bigger relative to the diameter of the circumscribed circle 'D'.

The shape of the shaped sawing wire can best be measured by means of a KEYENCE LS 3034 laser scan system in combination with a KEYENCE LS 3100 processing unit such as described in WO 95/16816. In this system a structured sawing wire of about 20 cm length is held taut under a force of 1±0.2 N. Then a diode laser head scans the wire along its length (the Z-axis) and the under and upper edge of the wire is recorded as a function of length at discrete positions '$z_i$' with index 'i'. The average of the under and upper edge values gives the position of the centre of the wire along the X-axis, perpendicular to the 'Z-axis' as a function of '$z_i$' i.e. $x(z_i)$. Then the fixation points are turned 90° and the scan is repeated. This results in the position of the centre of the wire along the Y-axis as a function of the '$z_i$' coordinate i.e. $y(z_i)$. Hence the parameter function $(x(z_i),y(z_i),z_i)$ defines the shape of the centre of the wire in three dimensions. By loading into a spreadsheet program, one can visualize the trace in an enlarged view which is needed as the indentations are quite small. One can rotate it by applying a rotation transformation to it, and observe the projections from any desired angle.

Also the measurement of the diameter 'D' can be performed on the trace by simply adding the diameter 'd' of the wire to the peak-to-peak amplitude of the traces measured. Moreover the length 'S' of the centre of the wire can be determined by adding the individual lengths of the discrete sections of the wire over a certain axial length of the shaped sawing wire 'L'.

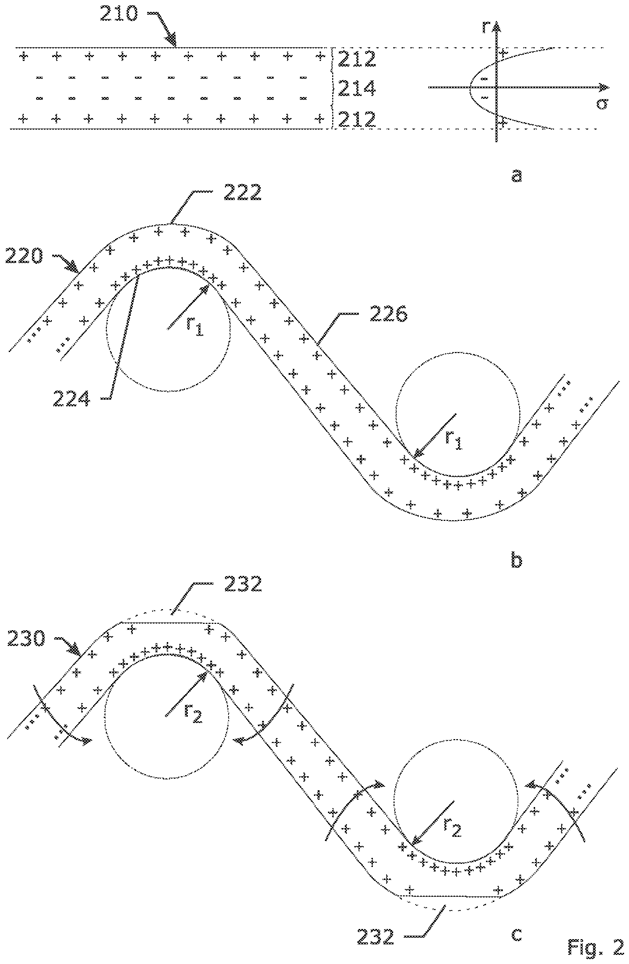

The distribution of the subsurface tensile residual stresses of the wire from beginning (the straight wire) to the sawing process (the shaped sawing wire) is illustrated in Fig.2, from 'a' to 'c'.

A straight steel wire 210 with tensile residual stresses is obtained as shown in Fig.2a. The internal stress distribution is such that a tensile subsurface layer 212 is present (indicated with '+' symbols). As the stress balance must remain zero (otherwise the wire would not be at rest) the core 214 of the wire has compressive residual stresses (indicated with '-' signs).

Such straight wire is then preformed into a wavy shape resulting in a shaped sawing wire 220 as shown in Figure 2b. The wire has a radius of curvature '$r_1$' at the inner side of the bends that is due to the internal stress distribution that is no longer radially symmetric. The plastic deformation during bending results in a reduced but still tensile residual subsurface stress in the radially outer curvature of the bends 222 and an increased tensile residual stress in the radially inner curvature of the bends 224 as show in Figure 2b. This unbalance results in a permanent deformation of the wire. The subsurface residual stresses in the not-bent segments 226 remain equal to that of the straight wire. When such a shaped sawing wire is used in the sawing process, the most protruding parts of the bends - the outer curvature of the bend - are worn step by step resulting in wire 230 as shown in Figure 2c. The subsurface tensile residual stresses in the radially outer curvature of the bends disappear as the material 232 is simply abraded away. That is to say, the balance of stresses within the wire itself is broken and the subsurface tensile residual stresses in the radially inner curvature of the bends start to exert a bending moment thereby decreasing or at least maintaining the radius of the curvature 'r$_2$' of the wire at the bend. A new moment balance will form over the cross section of the wire. This mechanism counters for the shape degradation of the shaped sawing wires in the cutting process because of wire wear, cut entry straightening effect and applied tension. Therefore, the shape of the wire while sawing is maintained so that the cutting action remains excellent till the exit of the cut.

According a first preferred embodiment I1, a 0.12 mm brass coating plated high tensile wire with subsurface residual tensile stresses of 1550 Mpa was provided with a plurality of crimps in two different planes (i.e. x-y plane and x-z plane). In the first plane, the saw wire comprises crimps having a wavelength of 3.6 mm with a peak-to-peak (i.e. double amplitude) value of 30 $\mu$m as determined by the laser scanning. In the second plane, the saw wire comprises crimps having a wavelength of 3.1 mm with a peak-to-peak value of 28 $\mu$m. This sample showed a 'D/d' value of 1.34 which was in the preferred range. The ratio of (S-L)/L for this wire was 0.029%.

In a second - I2 - and third - I3 - preferred embodiment the subsurface residual tensile stress was further increased by using different die angles during drawing. This resulted in even higher tensile residual stress of about 1600 MPa and about 1700 MPa respectively on the straight wires prior to crimping. The wires were crimped in an analogous way as in the first preferred embodiment.

Next to that reference wires R1, R2 and R3 were made. Reference wire R3 is a conventional sawing wire having neutral to compressive residual stresses that was not crimped nor bent. Subsurface residual compressive or neutral stresses can be obtained by guiding the wire through a straightener device as explained in US 4612792.

Reference wire R1 is made from wire R3 but was crimped in a single plane with a wavelength of about 3.1 mm and a peak-to-peak value for the centerline of 35 $\mu$m.

Reference wire R2 was made from the same straight wire R3 but was now crimped in two planes approximately perpendicular to one another. The geometrical parameters as obtained on the wire before and after sawing are summarized in Table 1:

Table 1: 'P2P' is 'peak to peak' of the centreline of the wire

| Wire | Keyence measurement geometry determination 1N preload before cutting / after cutting | | | |
| --- | --- | --- | --- | --- |
| | Wave 1 (mm) | Wave 2 (mm) | P2P1 (mm) | P2P2 (mm) |
| I1 | 3.602 / 3.626 | 3.061 / 3.164 | 0.030 / 0.017 | 0.028 / 0.011 |
| I2 | 3.592 / 3.613 | 3.063 / 3.291 | 0.035 / 0.021 | 0.026 / 0.014 |
| I3 | 3.594 / 3.618 | 3.281 / 3.599 | 0.039 / 0.018 | 0.024 / 0.011 |
| R1 | 3.065 / 3.172 | -/- | 0.035 / 0.008 | -/- |
| R2 | 3.605 / 3.909 | 3.061 / 3.449 | 0.022 / 0.006 | 0.015 / 0.005 |
| R3 | 0 / 0 | 0 / 0 | 0 / 0 | 0 / 0 |

For the above described Table 1, the inventive wires I1, I2 and I3 show a good stability of the shape before and after the first cut of the sawing process: the peak-to-peak values before and after sawing do decrease but to a much lesser extent than observed for the wires R1 or R2.

The Reference wires 'R1' and 'R2' and 'R3' and the inventive wires 'I1', 'I2' and 'I3' were tested on a single wire saw (RTS 480) in a reciprocating mode 183 m of wire going back and forth) with a wire speed of 600 m/s at a tension 16 N. The wire was lowered through a mono-crystalline silicon block of size 125$\times$125 mm$^2$ at a speed of 1.0 mm/min. A mixture of PEG with JIS 1500 silicon carbide in a 1:0.9 weigh ratio was used as cutting slurry. The median particle size is 10 $\mu$m. The bow height or sagita ('BH', expressed in mm) formed at the end of the cut was used a measure for the cutting efficiency of the wire. The lower the bow height at the end of the cut, the better the cutting efficiency.

When subjecting now the different wires to a sawing operation, it is observed that the bow height at the end of the cut is significantly lower for the inventive wires I1, I2 and I3 as compared to the conventional crimped reference wires R1 and R2.

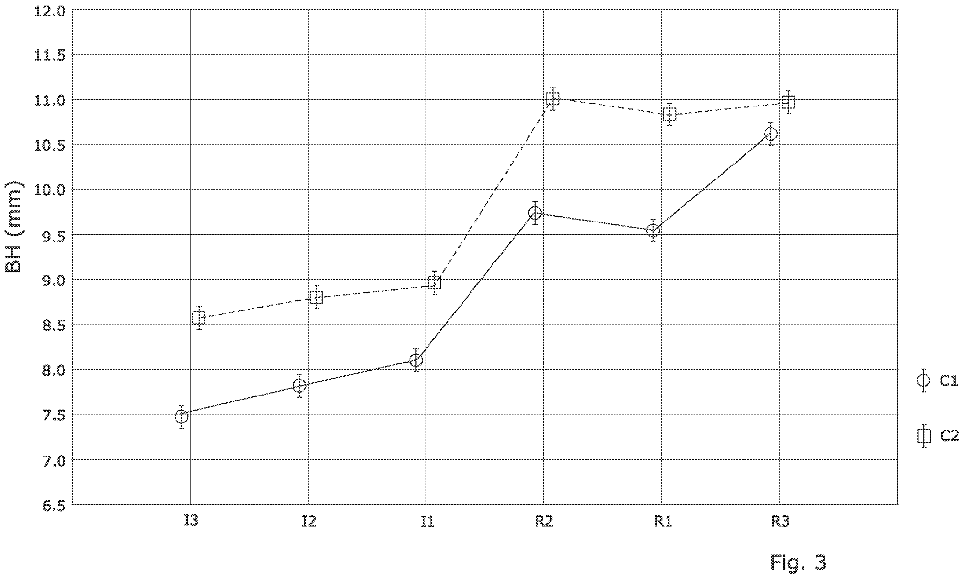

Figure 3 shows the performance of the reference wires R1, R2, R3 and the inventive wires I1, I2, I3 after 1 (C1) or 2 (C2) subsequent cuts with the same wire. All the wires show an increased bow after repeated use, which can be attributed to the shape change of the wire. It will be clear from the Figure 3 that the wires with high tensile residual subsurface stresses have the best cutting efficiency among the six wires. This is in accordance with the better shape retention of the wires as illustrated in Table 1. Shaped wires with high tensile residual subsurface stresses keep better their shape when sawing thereby resulting in a better cutting efficiency.

It is therefore asserted that shaped wires that after cutting show a peak-to-peak value that is more than half of the peak-to-peak value prior to cutting fall under the claims of the present invention.

## Claims

1. A shaped sawing wire (110, 120, 130, 220) comprising a wire with diameter 'd' having bends (112, 132, 222, 224) with segments in between (226), wherein said shaped sawing wire has an axis and wherein said wire has a wavy shape in one or more planes, said one or more planes comprising said axis, wherein said shaped sawing wire further has a circumscribed diameter 'D' and wherein the ratio D/d is between 1.04 and 1.40 before sawing **characterised in that** said wire has subsurface tensile residual stresses (+) in the outer layer of said wire, for keeping the shape of the shaped sawing wire while sawing, wherein the centreline of said wire has a length 'S' when measured over an axial length 'L', and wherein (S-L)/L is between 0.006 and 0.6 per cent.

2. The shaped sawing wire according to claim 1 wherein said subsurface residual stresses in said segments (226) are at least 1500 MPa.

3. The shaped sawing wire according to claim 1 wherein said sawing wire has subsurface tensile residual stresses in the inner curvatures (224) of said bends.

4. The shaped sawing wire according to claim 3 wherein said subsurface tensile residual stresses at the inner curvatures (224) of said bends is at least 2000 MPa.

5. The shaped sawing wire (110) according to claim 1 wherein said wire has a wavy shape in a first plane (XZ) and in a second plane (YZ), said second plane being different from said first plane.

6. The shaped sawing wire (120) according to claim 1 wherein the angle of said one or more planes relative to a fixed plane comprising said axis varies along the axial length of said sawing wire.

7. The shaped wire according to claim 6 wherein said angle increases or decreases along the axial length of said sawing wire.

8. The shaped wire according to claim 7 wherein said angle alternatingly increases over a first length and subsequently decreases along a second length.

9. The shaped sawing wire (110, 120, 130) according to any one of claims 1 to 8 wherein the distance along said axis between bends is between 10 and 100 times the diameter 'd' of said wire.

10. The shaped sawing wire according to any one of claims 1 to 9 wherein the surface of said wire is bare steel.

11. The shaped sawing wire according to any one of claims 1 to 9 wherein the surface of said wire is covered with a coating comprising at least one out of the group comprising copper, zinc, tin, nickel, cobalt or alloys thereof.

12. The shaped sawing wire according to claim 11 wherein said coating further comprises abrasive particles selected from the group comprising diamond, cubic boron nitride, silicon carbide, aluminium oxide, silicon nitride, tungsten carbide or mixtures thereof.

13. A shaped sawing wire (110, 120, 130, 220) comprising a wire having bends (112, 132, 222, 224) with segments in between before sawing wherein said wire has a diameter 'd' between 50 to 300 $\mu$m, further **characterised in that** said subsurface tensile residual stress is such that the radius of curvature of said wire prior to the etching according to the conventional method is larger than 1000 times the diameter 'd' and wherein the diameter of the circlet formed after etching according said conventional method is smaller than 200 times the diameter 'd' wherein said conventional method to test the residual stresses of a steel wire comprises the following steps:

- cut off an about 85 mm long wire specimen. Such sample may show some curvature which should not be straightened out;

- Pickle the wire specimen for 10 minutes in a pickling solution made of 16 gram $(NH_4)_2S_2O_8$ and 120 mL $NH_4OH$ diluted to 1 litre with demineralized water;
- Water-rinse for 30 sec and air dry for 1 min;
- Bent one end over and form a clear angle of about 90° so that a tail of $70\pm1$ mm forms. The bend should be made radially inward of the curvature taken by the wire specimen in the plane of the wire specimen;
- Lacquer the short bent-over part (15 mm) with enamel nail paint and air dry for 1 min;
- Lacquer the inner side of the wire surface with enamel paint and air dry 1 min. About half of the circumference of the wire in cross section should be covered with enamel paint;
- Copy the shape of the specimen on a paper;
- Etch the specimen in etching solution at temperature $50\pm2$ °C for a period of time according to following formula:

$$\text{Time (sec.)} = 186.7 \times \text{wire diameter in mm} - 12.9$$

wherein the etching solution is made of one part $HNO_3$ and one part demineralised water. A layer of about 10% of the diameter 'd' of the wire is etched away from the non-covered part.
- Water-rinse for 5 sec. and air dry for 1 min.;
- Put the bent-over part of the etched specimen exactly on its original position on the paper copy. Take another photocopy of the specimen for reference. The second copy shows the shape of the wire before and after etching;
- Determine the radius of curvature '$\rho_0$'of the sample before etching and after etching '$\rho_1$' by drawing a tangent circle at the bend with its centre in line with the short bent-over part.
- When, after etching, the wire tail bends in the direction of the short bent-over part, the residual stresses in the outer layer of the wire are tensile in nature. When, after etching, the wire tail bends away from the short bent-over part, the residual stresses in the outer layer of the wire are compressive in nature.

14. The shaped sawing wire (110, 120) according to claim 1 wherein said wavy shape in one or more planes has a peak-to-peak value of the centreline of the wire, said peak-to-peak value of the centreline after cutting being larger than half of the peak-to-peak value prior to cutting, said cutting being performed on a single wire saw (RTS 480) in a reciprocating mode 183 m of wire going back and forth with a wire speed of 600 m/s at a tension 16 N whereby the wire is lowered through a mono-crystalline silicon block of size $125\times125$ mm$^2$ at a speed of 1.0 mm/min and wherein a mixture of PEG with JIS 1500 silicon carbide with a median particle size of 10 $\mu$m in a 1:0.9 weigh ratio is used as cutting slurry.

## Patentansprüche

1. Profilsägedraht (110, 120, 130, 220), der einen Draht mit einem Durchmesser 'd' umfasst, der Biegungen (112, 132, 222, 224) mit Segmenten dazwischen (226) aufweist, wobei der Profilsägedraht eine Achse hat und wobei der Draht eine gewellte Form in einer oder mehreren Ebenen hat, wobei die eine oder mehreren Ebenen die Achsen umfassen, wobei der Profilsägedraht ferner einen umschriebenen Durchmesser 'D' hat und wobei das Verhältnis von D/d zwischen 1,04 und 1,40 vor dem Sägen liegt, **dadurch gekennzeichnet, dass** der Draht Eigenzugspannungen (+) unter der Oberfläche in der äußeren Schicht des Drahts hat, um die Form des Profilsägedrahts während des Sägens zu bewahren, wobei die Mittellinie des Drahts eine Länge 'S', wenn über eine Axiallänge 'L' gemessen, aufweist und wobei (S-L)/L zwischen 0,006 und 0,6 Prozent beträgt.

2. Profilsägedraht nach Anspruch 1, wobei die Eigenspannungen unter der Oberfläche in den Segmenten (226) mindestens 1500 MPa betragen.

3. Profilsägedraht nach Anspruch 1, wobei der Sägedraht Eigenzugspannungen unter der Oberfläche in den inneren Krümmungen (224) der Biegungen aufweist.

4. Profilsägedraht nach Anspruch 3, wobei die Eigenzugspannungen unter der Oberfläche an den inneren Krümmungen (224) der Biegungen mindestens 2000 MPa betragen.

5. Profilsägedraht (110) nach Anspruch 1, wobei der Draht eine gewellte Form in einer ersten Ebene (XZ) und in einer zweiten Ebene (YZ) hat, wobei die zweite Ebene von der ersten Ebene verschieden ist.

6.  Profilsägedraht (120) nach Anspruch 1, wobei der Winkel der einen oder mehreren Ebenen in Bezug auf eine feste Ebene, die die Achse umfasst, entlang der Axiallänge des Sägedrahts variiert.

7.  Profildraht nach Anspruch 6, wobei der Winkel entlang der Axiallänge des Sägedrahts zunimmt oder abnimmt.

8.  Profildraht nach Anspruch 7, wobei der Winkel über eine erste Länge abwechselnd zunimmt und anschließend entlang einer zweiten Länge abnimmt.

9.  Profilsägedraht (110, 120, 130) nach einem der Ansprüche 1 bis 8, wobei der Abstand zwischen Biegungen entlang der Achse zwischen dem 10- und 100-Fachen des Durchmessers 'd' des Drahts beträgt.

10. Profilsägedraht nach einem der Ansprüche 1 bis 9, wobei die Oberfläche des Drahts aus blankem Stahl ist.

11. Profilsägedraht nach einem der Ansprüche 1 bis 9, wobei die Oberfläche des Drahts mit einer Beschichtung überzogen ist, die mindestens eines aus der Gruppe umfassend Kupfer, Zink, Zinn, Nickel, Kobalt oder Legierungen davon umfasst.

12. Profilsägedraht nach Anspruch 11, wobei die Beschichtung ferner Schleifpartikel umfasst, die ausgewählt sind aus der Gruppe umfassend Diamant, kubisches Bornitrid, Siliziumkarbid, Aluminiumoxid, Siliziumnitrid, Wolfgangkarbid oder Mischungen davon.

13. Profilsägedraht (110, 120, 130, 220), der einen Draht umfasst, der Biegungen (112, 132, 222, 224) mit Segmenten dazwischen vor dem Sägen aufweist, wobei der Draht einen Durchmesser 'd' zwischen 50 und 300 $\mu$m aufweist, ferner **gekennzeichnet dadurch, dass** die Eigenzugspannung unter der Oberfläche derart ist, dass der Krümmungsradius des Drahts, vor einem Ätzvorgang gemäß einem herkömmlichen Verfahren, größer als das 1000-Fache des Durchmessers 'd' ist und wobei der Durchmesser des kleinen Kreises, der nach dem Ätzvorgang gemäß dem herkömmlichen Verfahren ausgebildet ist, kleiner als das 200-Fache des Durchmessers 'd' ist, wobei das herkömmliche Verfahren zum Testen der Eigenspannungen eines Stahldrahts die folgenden Schritte umfasst:

- Abschneiden einer etwa 85 mm langen Drahtprobe. Eine derartige Probe kann eine Krümmung aufzeigen, die nicht geradegebogen werden sollte;
- 10-minütiges Abbeizen der Drahtprobe in einer Beizlösung, die aus 16 Gramm $(NH_4)_2S_2O_8$ und 120 ml $NH_4OH$ verdünnt mit 1 Liter demineralisiertes Wasser besteht;
- Spülen mit Wasser 30 Sekunden lang und Lufttrocknen 1 Minute lang;
- Umbiegen eines Endes und Formen eines klaren Winkels von etwa 90°, so dass ein Ende von 70$\pm$1 mm geformt ist. Die Biegung sollte radial nach innen der Krümmung erfolgen, die von der Drahtprobe in der Ebene der Drahtprobe hergenommen ist;
- Lackieren des kurzen umgebogenen Teils (15mm) mit Emailnagelfarbe und Lufttrocknen 1 Minute lang;
- Lackieren der Innenseite der Drahtoberfläche mit Emailfarbe und Lufttrocknen 1 Minute lang. Etwa die Hälfte des Umfangs des Drahts im Querschnitt sollte mit der Emailfarbe umzogen sein;
- Kopieren der Form der Probe auf ein Papier;
- Ätzen der Probe in Ätzlösung bei einer Temperatur von 50$\pm$2 °C für eine Zeitdauer gemäß der folgenden Formel:

    • Zeit (Sek.) = 186,7 x Drahtdurchmesser in mm - 12,9 wobei die Ätzlösung aus einem Teil $HNO_3$ und einem Teil demineralisiertem Wasser besteht. Eine Schicht von etwa 10 % des Durchmessers 'd' des Drahts wird von dem nicht umzogenen Teil weggeätzt;

- Spülen mit Wasser 5 Sekunden lang und Lufttrocknen 1 Minute lang;
- Zurückbringen des umgebogenen Teils der geätzten Probe exakt in seine Ausgangsposition auf der Kopie auf dem Papier. Als Referenz wird eine weitere Fotokopie der Probe genommen. Die zweite Kopie zeigt die Form des Drahts vor und nach dem Ätzen;
- Bestimmen des Krümmungsradius '$\rho_0$' der Probe vor und nach dem Ätzen '$\rho_1$' durch Ziehen eines Tangentenkreises an der Biegung, wobei sein Mittelpunkt auf einer Linie mit dem kurzen umgebogenen Teil ist;
- Wenn sich das Drahtende nach dem Ätzen in die Richtung des kurzen umgebogenen Teils biegt, sind die Eigenspannungen in der äußeren Schicht des Drahts von streckbarer Natur. Wenn sich das Drahtende nach dem Ätzen von dem kurzen umgebogenen Teil weg biegt, sind die Eigenspannungen in der äußeren Schicht des Drahts von zusammenziehender Natur.

**14.** Profilsägedraht (110, 120) nach Anspruch 1, wobei die gewellte Form in einer oder mehreren Ebenen einen Spitze-zu-Spitze-Wert der Mittellinie des Drahts aufweist, wobei der Spitze-zu-Spitze-Wert der Mittellinie nach dem Schneiden größer als die Hälfte des Spitze-zu-Spitze-Werts vor dem Schneiden ist, wobei das Schneiden an einer einzelnen Drahtsäge (RTS 480) in einem sich hin- und herbewegenden Betrieb mit 183 m an Draht, der sich mit einer Drahtgeschwindigkeit von 600 m/s bei einer Spannung von 16 N vor- und zurückbewegt, ausgeführt wird, wobei der Draht durch einen monokristallinen Siliziumblock mit einer Größe von $125 \times 125$ mm$^2$ bei einer Geschwindigkeit von 1,0 mm/min gesenkt wird und wobei eine Mischung von PEG mit JIS 1500 Siliziumkarbid mit einer mittleren Teilchengröße von 10 μm in einem Gewichtsverhältnis von 1:0,9 als Schneideaufschlämmung verwendet wird.

**Revendications**

**1.** Fil de sciage profilé (110, 120, 130, 220) comprenant un fil avec un diamètre 'd' ayant des plis (112, 132, 222, 224) avec entre eux des segments (226), ledit fil de sciage profilé ayant un axe et ledit fil ayant une forme ondulée dans un ou plusieurs plans, ledit ou lesdits plans comprenant ledit axe, ledit fil de sciage profilé ayant en outre un diamètre circonscrit 'D' et le rapport D/d se situant entre 1,04 et 1,40 avant sciage, **caractérisé en ce que** ledit fil a des contraintes résiduelles de tension sous la surface (+) dans la couche externe dudit fil, pour maintenir la forme du fil de sciage profilé pendant le sciage, dans lequel la ligne médiane dudit fil a une longueur 'S' lorsqu'elle est mesurée sur une longueur axiale 'L', et dans lequel (S-L)/L se situe entre 0,006 et 0,6 pour cent.

**2.** Fil de sciage profilé selon la revendication 1 dans lequel lesdites contraintes résiduelles sous la surface dans lesdits segments (226) sont d'au moins 1 500 MPa.

**3.** Fil de sciage profilé selon la revendication 1, ledit fil de sciage ayant des contraintes résiduelles de tension sous la surface dans les courbures internes (224) desdits plis.

**4.** Fil de sciage profilé selon la revendication 3 dans lequel lesdites contraintes résiduelles de tension sous la surface au niveau des courbures internes (224) desdits plis sont d'au moins 2 000 MPa.

**5.** Fil de sciage profilé (110) selon la revendication 1, ledit fil ayant une forme ondulée dans un premier plan (XZ) et dans un deuxième plan (YZ), ledit deuxième plan étant différent dudit premier plan.

**6.** Fil de sciage profilé (120) selon la revendication 1 dans lequel l'angle dudit ou desdits plans par rapport à un plan fixe comprenant ledit axe varie le long de la longueur axiale dudit fil de sciage.

**7.** Fil profilé selon la revendication 6 dans lequel ledit angle augmente ou diminue le long de la longueur axiale dudit fil de sciage.

**8.** Fil profilé selon la revendication 7 dans lequel ledit angle, alternativement, augmente sur une première longueur et diminue ensuite le long d'une deuxième longueur.

**9.** Fil de sciage profilé (110, 120, 130) selon l'une quelconque des revendications 1 à 8 dans lequel la distance le long dudit axe entre plis fait entre 10 et 100 fois le diamètre 'd' dudit fil.

**10.** Fil de sciage profilé selon l'une quelconque des revendications 1 à 9, la surface dudit fil étant de l'acier nu.

**11.** Fil de sciage profilé selon l'une quelconque des revendications 1 à 9, la surface dudit fil étant recouverte d'un revêtement comprenant au moins un élément du groupe comprenant le cuivre, le zinc, l'étain, le nickel, le cobalt ou les alliages de ceux-ci.

**12.** Fil de sciage profilé selon la revendication 11 dans lequel ledit revêtement comprend en outre des particules abrasives choisies dans le groupe comprenant le diamant, le nitrure de bore cubique, le carbure de silicium, l'oxyde d'aluminium, le nitrure de silicium, le carbure de tungstène ou les mélanges de ceux-ci.

**13.** Fil de sciage profilé (110, 120, 130, 220) comprenant un fil ayant des plis (112, 132, 222, 224) avec entre eux des segments avant sciage, ledit fil ayant un diamètre 'd' entre 50 et 300 μm, **caractérisé en outre en ce que** ladite contrainte résiduelle de tension sous la surface est telle que le rayon de courbure dudit fil avant une gravure selon un procédé conventionnel est supérieur à 1 000 fois le diamètre 'd' et dans lequel de diamètre du petit cercle formé après la gravure selon ledit procédé conventionnel est inférieur à 200 fois le diamètre 'd', ladite gravure selon ledit procédé conventionnel comprenant les étapes suivantes pour tester les contraintes résiduelles d'un fil d'acier :

- couper un échantillon de fil d'environ 85 mm de long. Un tel échantillon peut présenter une certaine courbure qui ne devrait pas être redressée ;
- décaper l'échantillon de fil pendant 10 minutes dans une solution de décapage constituée de 16 grammes de $(NH_4)_2S_2O_8$ et 120 mL de $NH_4OH$ diluée jusqu'à 1 litre avec de l'eau déminéralisée ;
- rincer à l'eau pendant 30 s et sécher à l'air pendant 1 min ;
- replier une extrémité et former un angle net d'environ 90° de telle sorte qu'une queue de 70 $\pm$ 1 mm se forme. Le pli devrait être réalisé radialement du côté intérieur de la courbure prise par l'échantillon de fil dans le plan de l'échantillon de fil ;
- laquer la petite partie repliée (15 mm) avec de la peinture-émail pour ongles et sécher à l'air pendant 1 min ;
- laquer le côté interne de la surface de fil avec de la peinture-émail et sécher à l'air pendant 1 min. La moitié environ de la circonférence du fil en coupe transversale devrait être recouverte de peinture-émail ;
- copier la forme de l'échantillon sur un papier ;
- graver l'échantillon dans une solution de gravure à une température de 50 $\pm$ 2 °C pendant un laps de temps en fonction de la formule suivante :

  ▪ Temps (s) = 186,7 $\times$ diamètre du fil en mm - 12,9, la solution de gravure étant constituée d'une partie de $HNO_3$ et d'une partie d'eau déminéralisée. Une couche faisant environ 10 % du diamètre 'd' du fil est retirée de la partie non recouverte.

- rincer à l'eau pendant 5 s et sécher à l'air pendant 1 min ;
- placer la partie repliée de l'échantillon gravé exactement sur sa position initiale sur la copie papier. Prendre une autre photocopie de l'échantillon pour référence. La deuxième copie montre la forme du fil avant et après gravure ;
- déterminer le rayon de courbure '$\rho_0$' de l'échantillon avant gravure et '$\rho_1$' après gravure en traçant un cercle tangent au niveau du pli avec son centre aligné avec la courte partie repliée.
- lorsque, après gravure, la queue du fil se plie dans la direction de la courte partie repliée, les contraintes résiduelles dans la couche externe du fil sont de tension par nature. Quand, après gravure, la queue du fil se plie à l'opposé de la courte partie repliée, les contraintes résiduelles dans la couche externe du fil sont de compression par nature.

14. Fil de sciage profilé (110, 120) selon la revendication 1 dans lequel ladite forme ondulée dans un ou plusieurs plans a une valeur de pic à pic de la ligne médiane du fil, ladite valeur de pic à pic de la ligne médiane après la coupe étant plus grande que la moitié de la valeur de pic à pic avant la coupe, ladite coupe étant effectuée sur une seule scie à fil (RTS 480) dans un mode de va-et-vient avec 183 m de fil faisant des allers-retours à une vitesse de fil de 600 m/s à une tension de 16 N, le fil étant abaissé à travers un bloc de silicium monocristallin d'une taille de 125 $\times$ 125 mm$^2$ à une vitesse de 1,0 mm/min et un mélange de PEG avec du carbure de silicium JIS 1500 avec une taille moyenne de particules de 10 $\mu$m dans un rapport pondéral de 1:0,9 étant utilisé comme suspension de coupe.

Fig. 1a

Fig. 1b

Fig. 1c

Fig. 2

Fig. 3

**REFERENCES CITED IN THE DESCRIPTION**

**Patent documents cited in the description**

- KR 100888026 B1
- WO 2006067062 A
- WO 2012069314 A
- WO 9516816 A
- US 4612792 A